# EUROPÄISCHE PATENTANMELDUNG

(11) **EP 0 723 888 A1**
(43) Veröffentlichungstag der Anmeldung: **31.07.1996**
(21) Anmeldenummer: 95118337.5
(22) Anmeldetag: 22.11.1995
(51) Int. Cl.: B60L 3/00, B60L 3/04, B60L 15/10

(54) **Sicherheitsschaltung für Kfz mit Elektrotraktion**

(30) Priorität: 27.01.1995 DE 19502501
(71) Anmelder: FICHTEL & SACHS AG, D-97424 Schweinfurt (DE)
(72) Erfinder: Fliege, Hans, Dipl.-Ing. (FH), D-97531 Theres (DE)

(57) **Zusammenfassung**

Es wird vorgeschlagen, Komponenten eines insbesondere nicht schienengebundenen Fahrzeugs mit elektromotorischem Fahrantrieb vor der schädlichen Wirkung von im Fahrbetrieb auftretenden Beschleunigungen zu schützen, indem die einem Antriebsmotor des Fahrzeugs zugeführte Betriebsleistung gesenkt wird, wenn die an bestimmten Komponenten des Fahrzeugs auftretenden Beschleunigungen Werte erreichen, welche diese Komponenten unmittelbar gefährden oder deren Lebensdauer reduzieren. Hierzu wird ein wenigstens einen Elektromotor (15), eine den Elektromotor mit Betriebsleistung versorgende Leistungsversorgungseinrichtung (21) und eine elektronische Schaltungsanordnung (27) zur Steuerung der dem Elektromotor (15) zugeführten Betriebsleistung umfassender Fahrantrieb mit Beschleunigungssensormitteln (31) sowie mit Bewertungsmitteln (33) ausgestattet, wobei die Beschleunigungssensormittel (31) wenigstens eine von der Beschleunigung zumindest eines Bauteils (29) des Fahrzeugs abhängige Größe liefern, auf welche die Bewertungsmittel (33) ansprechen und die elektronische Schaltungsanordnung (27) so steuern, daß zumindest in einem Teil des Wertebereichs der beschleunigungsabhängigen Größe die dem Elektromotor (15) zugeführte Betriebsleistung entsprechend einer vorbestimmten Charakteristik gemindert wird.

## Beschreibung

Die Erfindung betrifft einen elektromotorischen Fahrantrieb für ein insbesondere nicht schienengebundenes Fahrzeug.

Es sind, z. B. aus der Zeitschrift "VDI-Berichte Nr. 878, 1991, Seiten 611 bis 622", elektromotorisch angetriebene, nicht Schienengebundene Fahrzeuge bekannt, deren Räder durch Elektromotoren angetrieben werden. Bei derartigen Fahrzeugen werden ein oder mehrere Elektromotoren aus einem Bordnetz mit elektrischer Betriebsleistung versorgt und das in den Elektromotoren erzeugte Drehmoment wird auf die Antriebsräder des Fahrzeugs übertragen. Als Elektromotoren sind hier Drehfeldmotoren beliebiger Bauart mit einer in mehrere Phasenwicklungen unterteilten Drehfeldwicklung einsetzbar. Es haben sich dabei Permanentmagnet-Außenläufermotoren als besonders geeignet erwiesen. Die Phasenwicklungen der Elektromotoren werden aus mehreren, den einzelnen Motoren zugeordneten Umrichtern mit phasenverschobenen, pulsierenden Treiberströmen gespeist. Bei diesen Umrichtern handelt es sich um elektronische Umrichter, die die Pulsationsrate und die Amplitude der Treiberströme mittels elektronischer Halbleiterventile nach Maßgabe einer Fahrsteuerung des Fahrzeugs, beispielsweise über ein Fahrpedal oder dergleichen, steuern. Die Umrichter wiederum werden aus dem Bordnetz gespeist, welches z. B. durch einen von einer Brennkraftmaschine angetriebenen Generator, aber auch durch eine wiederaufladbare Batterie gestellt werden kann. Zur Übertragung des vom Elektromotor erzeugten Drehmoments auf ein oder mehrere Antriebsräder werden Gelenkwellen, ggf. Differentialgetriebe und auch Untersetzungsgetriebe verwendet.

Ein für einen Fahrzeugantrieb verwendeter Elektromotor muß über einen breiten Drehzahlbereich eine vergleichsweise hohe Leistung erbringen. Die Phasenwicklungen werden dabei mit Treiberströmen von bis zu 1000 A bei bis zu 2 kHz aus den Umrichtern gespeist. Bei gegebener Frequenz und Stärke des Treiberstroms ist es des weiteren möglich, durch Ändern der Schaltungskonfiguration der Drehfeldwicklungen das Drehmoment und die Drehzahl des Elektromotors zu verändern. Wie aus der EP-A-340,686 bekannt, kann hierzu die Zahl der in Serie bzw. in Reihe geschalteten Phasenwicklungen mit Hilfe einer Vielzahl steuerbarer Schalter verändert werden. Zu diesem Zweck werden üblicherweise mechanische Schalter eingesetzt, deren bewegliche Kontaktelemente durch z. B. einen elektromotorischen Stellantrieb verstellt werden können. Bei Fahrzeugen der eben beschriebenen Art ist es des weiteren üblich, im Bordnetz oder in den Stromzuführungen zu den Phasenwicklungen Schalter vorzusehen, welche die Leistungszufuhr zu den Elektromotoren, z. B. beim Auftreten einer Notsituation, stromlos schalten können.

Die im Fahrbetrieb am Fahrzeug auftretenden, beim Befahren holperigen Untergrunds unter Umständen sehr hohen Beschleunigungen können zu einer nennenswerten Belastung und einer damit einhergehenden frühzeitigen Ermüdung der Fahrzeugstrukturkomponenten und auch der im Antriebsstrang liegenden drehmomentübertragenden Komponenten führen. Einer besonderen Gefährdung durch im Fahrbetrieb auftretende Beschleunigung unterliegen mechanische Schalter im elektrischen Betriebsleistungsweg der Elektromotoren: Eine an einem derartigen Schalter angreifende Beschleunigung ist in der Lage, einen an sich geschlossenen Schaltkontakt zu öffnen, indem die aufgrund der Beschleunigung an dem beweglichen Kontaktelement angreifende Trägheitskraft des Kontaktelements oder/und des mit diesem Kontaktelement verbundenen Stellantriebs die Kraftwirkung einer den Kontaktschluß der Kontaktelemente sichernden Feder überwindet. Ist der Schalter zu diesem Zeitpunkt stromdurchflossen, entsteht ein Löschfunke, der bei den oben genannten Stromstärken zu einem nennenswerten Abbrand der Kontaktelemente oder auch zu einer Zerstörung des Schalters führen kann. Dem wird üblicherweise dadurch begegnet, daß die Schalter mittels starker Kontaktfedern entsprechend robust ausgelegt werden, was wiederum einen erhöhten Kraftaufwand der die Schalter betätigenden Stellantriebe und damit ein erhöhtes Gewicht der gesamten Schaltanordnung mit sich bringt.

Es ist Aufgabe der Erfindung, einen elektromotorischen Fahrantrieb für ein insbesondere nicht schienengebundenes Fahrzeug anzugeben, welcher im Fahrzeug verwendete Komponenten vor der schädlichen Wirkung von im Fahrbetrieb auftretenden Beschleunigungen schützt.

Die Erfindung geht aus von einem elektromotorischen Fahrantrieb für ein insbesondere nicht schienengebundenes Fahrzeug, umfassend:
- wenigstens einen Elektromotor,
- eine den Elektromotor mit Betriebsleistung versorgende Leistungsversorgungseinrichtung und
- eine elektronische Schaltungsanordnung zur Steuerung der dem Elektromotor zugeführten Betriebsleistung.

Gemäß der Erfindung ist bei einem Fahrantrieb der oben genannten Art vorgesehen, daß an dem Fahrzeug Beschleunigungssensormittel angeordnet sind, die wenigstens eine von der Beschleunigung zumindest eines Bauteils des Fahrzeugs abhängige Größe liefern und daß auf die wenigstens eine beschleunigungsabhängige Größe ansprechende Bewertungsmittel vorgesehen sind, die die elektronische Schaltungsanordnung so steuern, daß zumindest in einem Teil des Wertebereichs der beschleunigungsabhängigen Größe die dem Elektromotor zugeführte Betriebsleistung entsprechend einer vorbestimmten Charakteristik gemindert wird.

Der Erfindung liegt die Idee zugrunde, die dem Elektromotor zugeführte Betriebsleistung zu senken, wenn die an bestimmten Komponenten des Fahrzeugs auftretenden Beschleunigungen einen Wert erreichen, welcher diese Komponenten unmittelbar gefährdet oder deren Lebensdauer reduziert.

Die Erfassung der an Komponenten des Fahrzeugs auftretenden Beschleunigungswerte erfolgt durch ein oder mehrere Beschleunigungssensormittel, welche von Beschleunigungen wenigstens eines Bauteils des Fahrzeugs abhängende Größen liefern. Als Beschleunigungssensormittel kommen hierbei Sensoren in Betracht, welche Beschleunigungen indirekt oder direkt erfassen. Zu ersteren gehören z. B. Sensoren, welche einen Geschwindigkeitswert erfassen und damit durch Differenzenbildung die Änderung der Geschwindigkeit pro Zeiteinheit, d. h. die momentane Beschleunigung, zu bestimmen erlauben sowie Sensoren, welche den Abstand zweier Raumpunkte erfassen und damit die Bildung des momentanen Beschleunigungswertes über zweifache Differenzierung nach der Zeit ermöglichen. Die direkte Bestimmung der Beschleunigung erfolgt erfindungsgemäß mittels Beschleunigungssensoren, welche insbesondere wenigstens eine in eine Raumrichtung gerichtete, translatorische Beschleunigung erfassen.

Die durch die Beschleunigungssensormittel erfaßte beschleunigungsabhängige Größe wird Bewertungsmitteln zugeführt und dort analysiert. In Abhängigkeit von der erfaßten beschleunigungsabhängigen Größe steuern die Bewertungsmittel wiederum die elektronische Schaltanordnung zur Steuerung der dem Elektromotor zugeführten Betriebsleistung derart, daß die dem Elektromotor zugeführte Betriebsleistung entsprechend einer vorbestimmten Charakteristik gemindert wird, wenn der Wert der momentan erfaßten beschleunigungsabhängigen Größe in einem bestimmten Wertbereich liegt. Die Bewertungsmittel sprechen dabei bevorzugt auf die Amplitude oder/und die Änderungsrate der von den Beschleunigungssensormitteln gelieferten Größe an.

So ist insbesondere vorgesehen, die Charakteristik so auszugestalten, daß bei gemessenen Größen, welche geringen Beschleunigungswerten entsprechen, der Elektromotor mit einer unverminderten, beispielsweise durch die Stellung eines Fahrpedals bestimmten Leistung versorgt wird. Enspricht die beschleunigungsabhängige Größe jedoch einem gemessenen Beschleunigungswert, bei dessen Auftreten Komponenten des Fahrzeugs erwartungsgemäß Schäden davontragen könnten, so veranlaßt die Bewertungsschaltung die elektronische Schaltanordnung, die dem Elektromotor zugeführte Betriebsleistung zu mindern. Insbesondere ist vorgesehen, die Betriebsleistung vollständig abzuschalten, sobald die beschleunigungsabhängige Größe einen vorgegebenen Schwellenwert übersteigt.

Des weiteren ist in einer bevorzugten Ausführungsform vorgesehen, daß die Bewertungsmittel neben den durch die Beschleunigungssensormittel zur Verfügung gestellten beschleunigungsabhängigen Größen ebenfalls Größen berücksichtigen, welche die momentane Fahrgeschwindigkeit des Fahrzeugs oder/und die momentane Betriebsleistung des Elektromotors repräsentieren. Erstere kann beispielsweise an einem im Fahrzeug vorhandenen Tachometer abgegriffen werden, letztere z. B. durch die elektronische Schaltanordnung zur Steuerung der dem Elektromotor zugeführten Betriebsleistung ausgegeben werden. Diese Größen werden in die durch die Bewertungsmittel durchgeführte Analyse einbezogen, indem insbesondere z. B. die zur Minderung der Betriebsleistung vorgesehene vorbestimmte Charakteristik in Abhängigkeit dieser Größen geändert wird.

Durch Einbeziehung der dem Elektromotor zugeführten momentanen Betriebsleistung in die vorbestimmte Charakteristik ist es insbesondere möglich, die dem Elektromotor zugeführte Betriebsleistung in einem Wertebereich der beschleunigungsabhängigen Größe, welcher mittleren Beschleunigungen entspricht, kontinuierlich mit zunehmenden Beschleunigungen zu senken. So kann beispielsweise die Betriebsleistung bei geringen mittleren Beschleunigungswerten nur geringfügig, bei größeren mittleren Beschleunigungen stärker gemindert werden.

Um den bei höheren Fahrgeschwindigkeiten erfahrungsgemäß zu erwartenden höheren auftretenden Beschleunigungsspitzenwerten vorzubeugen, ist es in einer bevorzugten Ausgestaltung der Erfindung möglich, durch Einbeziehen der momentanen Fahrgeschwindigkeit in die Analyse der Bewertungsmittel den Schwellenwert, der zur Minderung, insbesondere Abschaltung der Betriebsleistung vorgesehen ist, zu verkleinern.

Neben den eben genannten Größen können weitere, den momentanen Zustand des Fahrzeugs repräsentierende, momentan bestimmte oder vorbestimmte Größen in die Analyse durch die Bewertungsmittel bzw. in die vorbestimmte Charakteristik eingehen.

Zweckmäßigerweise ist dabei vorgesehen, daß die vorbestimmte Charakteristik in einem oder mehreren Kennlinienspeichern als Kennlinie oder Kennlinienschar repräsentiert ist. Insbesondere kann die Charakteristik in Tabellenform gespeichert sein.

Die Bewertungsmittel werden bevorzugt als elektronische Schaltung ausgeführt, welche auf analoger Basis oder auch digital arbeiten kann. Es ist insbesondere auch vorgesehen, daß die Bewertungsmittel mikroprozessorgesteuert arbeiten, in einen eventuell im Fahrzeug angebrachten Bordcomputer integriert sind oder auch in Programmform in diesem Bordcomputer vorliegen. Dabei kann insbesondere der Kennlinienspeicher in den Arbeitsspeicher eines Mikroprozessors integriert sein.

Es ist vorgesehen, in den Betriebsleistungsweg zum Elektromotordes elektromotorischen Fahrantriebs wenigstens einen mechanischen Schalter mit wenigstens einem beweglichen Kontaktelement einzufügen. Dieser mechanische Schalter kann insbesondere Bestandteil einer Not-Ausschalteinrichtung sein. Er ist in diesem Fall dazu vorgesehen, bei Auftreten eines Notfalls, z. B. einer Unfallsituation, den Stromfluß im Betriebsleistungsweg und damit die dem Elektromotor zugeführte Betriebsleistung zu unterbrechen. Dieser mechanische Schalter im Betriebsleistungsweg kann zwischen dem Gleichstrombordnetz und dem den Elektromotor mit pulsierenden Treiberströmen versorgenden Umrichter eingefügt sein oder es können ein oder mehrere Schalter zwischen dem Umrichter und zwischen den einzelnen Drehfeldwicklungen des Elektromotors angeordnet sein. Dabei unterbricht ein Schalter, ein- oder mehrpolig ausgeführt, jeweils eine oder mehrere stromführende Phasen der Leistungsversorgungseinrichtung.

Des weiteren werden mechanische Schalter in einem elektromotorischen Fahrantrieb insbesondere dazu verwendet, die Schaltungskonfiguration der Drehfeldwicklungen des Elektromotors, d. h. die Zahl der in Serie bzw. in Reihe geschalteten Wicklungen, zu ändern. Dabei sind in einem elektromotorischen Fahrantrieb z. B. Permanentmagnet-Außenläufermotore vorgesehen, welche eine Dreiphasendrehfeldwicklung aufweisen, deren Schaltungskonfiguration mittels zwischen dem Umrichter und den einzelnen Phasenwicklungen eingefügter mechanischer Schalter zwischen einer Sternschaltung und einer Dreiecksschaltung änderbar ist. Diese Schalter sind vorteilhafterweise unmittelbar an den Anschlüssen der Drehfeldwicklungen des Elektromotors angeordnet.

Die beweglichen Kontaktelemente der mechanischen Schalter werden vorteilhafterweise durch einen mechanischen Stellantrieb von einer Schaltstellung in die andere bewegt. Der mechanische Stellantrieb wiederum wird beispielsweise elektromagnetisch, elektromotorisch oder mittels eines pneumatischen oder hydraulischen Druckmittels bewegt. Der Kontaktschluß zwischen den beweglichen und den feststehenden Kontaktelementen wird durch den Anpreßdruck von Federn, evtl. von bistabilen Federn gewährleistet.

Im Fahrbetrieb auftretende Beschleunigungen des mechanischen Schalters können dazu führen, daß die durch die Federwirkung aneinander gepreßten Kontaktelemente durch die auf die beweglichen Kontaktelemente und/oder die Stellmechanik wirkende Beschleunigungskraft entgegen der Wirkung der Federkraft getrennt werden. Ist der mechanische Schalter zu einem solchen Zeitpunkt stromdurchflossen, kann Löschfunkenbrand auftreten und den Schalter beschädigen.

Es ist in einer zweckmäßigen Ausgestaltung der Erfindung vorgesehen, Beschleunigungen, welche zum Öffnen der Kontaktelemente der mechanischen Schalter führen können, in den Beschleunigungssensormitteln zu erfassen und die die Schalter durchfließenden Ströme zu mindern, insbesondere vollständig abzuschalten, wenn die am Schalter auftretende Beschleunigung Werte erreicht, welche zu einer Öffnung der Kontaktelemente führen können. Insbesondere wird die Charakteristik, die die Minderung der Betriebsleistung bestimmt, und dabei insbesondere der Schwellenwert, bei dessen Überschreiten durch die beschleunigungsabhängige Größe die Betriebsleistung vollständig abgeschaltet wird, an die mechanischen Gegebenheiten des Schalters und an die Grenzbeschleunigung, bei deren Auftreten ein Kontaktschluß der beweglichen Kontaktelemente nicht mehr gewährleistet ist, angepaßt.

Vorteilhafterweise ist dabei vorgesehen, Beschleunigungssensormittel in unmittelbarer funktioneller Nähe des mechanischen Schalters anzuordnen und insbesondere diese beiden Elemente zu einer Baueinheit zu vereinigen. Als besonders vorteilhaft erweist es sich dabei, die Beschleunigungssensormittel derart auszurichten, daß die Raumrichtung, in der sie auf translatorische Beschleunigungen am empfindlichsten sind, mit der Raumrichtung zusammenfällt, in der auftretende Beschleunigungen den Kontaktschluß der beweglichen Kontaktelemente am leichtesten öffnen können. Es versteht sich, daß die Beschleunigungssensormittel aber, wie nachstehend noch erläutert, alternativ auch von dem Schalter gesondert angeordet werden können, z. B. in Vorwärts-Fahrtrichtung vor dem Schalter, um Stöße oder dergleichen frühzeitig erkennen zu können.

Es ist gemäß einer besonderen Ausgestaltung der Erfindung ebenfalls vorgesehen, mechanische Komponenten, wie zwischen zwischen Elektromotor und wenigstens einem Rad des Fahrzeugs angeordnete Drehmomentübertragungseinrichtungen, insbesondere Getriebe oder/und Gelenkwellen, vor der schädlichen Wirkung harter Beschleunigungen, wie sie z. B. beim Durchfahren von Schlaglöchern auftreten, zu schützen, indem die dem Elektromotor zugeführte Betriebsleistung und damit die Belastung der Drehmomentübertragungseinrichtungen gemindert wird.

Hierzu wird bevorzugterweise die für die Minderung der Betriebsleistung durch die Bewertungsmittel maßgebliche Charakteristik an die mechanischen Gegebenheiten und Belastungsgrenzen der Drehmomentübertragungseinrichtungen angepaßt. Es ist insbesondere auch in diesem Fall zweckmäßig, neben der durch die Beschleunigungssensormittel erfaßten beschleunigungsabhängigen Größe auch die dem Elektromotor zugeführte Betriebsleistung in den Bewertungsmitteln zu erfassen und die Charakteristik so zu gestalten, daß die Belastungsgrenzen in den Drehmomentübertragungseinrichtungen durch die kombinierte Wirkung der momentanen Beschleunigung und des momentan übertragenen Drehmoments nicht überschritten werden.

Zweckmäßigerweise ist bei einem elektromotorischen Fahrantrieb der oben erläuterten Art zweckmäßigerweise vorgesehen, die Beschleunigungssensormittel in Vorwärtsfahrtrichtung des Fahrzeugs im Abstand vor einem durch Minderung der Betriebsleistung des Elektromotors vor Beschleunigungseinwirkung zu schützenden Bauteil anzuordnen. Dies ist insbesondere zweckmäßig für den Fall, daß Drehmomentübertragungseinrichtungen oder/und in den Betriebsleistungsweg eingebaute mechanische Schalter vor Beschleunigungseinwirkungen zu schützen sind.

Weist ein elektromotorischer Fahrantrieb beispielsweise ein vor schädlicher Beschleunigungswirkung zu schützendes Bauteil im Bereich der Hinterachse des Fahrzeugs auf, so ist bevorzugt vorgesehen, die Beschleunigungssensormittel im Bereich der Vorderachse und insbesondere in Vorwärtsfahrtrichtung gesehen vor der Vorderachse anzuordnen. Zum Schutz der ein Hinterrad eines Fahrzeugs antreibenden Drehmomentübertragungseinrichtungen ist es ebenfalls besonders zweckmäßig, die Beschleunigungssensormittel an einem diesem Hinterrad vorauslaufenden Vorderrad anzuordnen.

Sind in einem Fahrzeug zum Erkennen von Unfallsituationen spezialisierte Komponenten, wie eine Airbag-Steuerschaltung oder/und ein Unfalldatenspeicher vorhanden und liegt ein mechanischer Schalter, der Bestandteil einer Not-Ausschaltvorrichtung ist, als vor Beschleunigungen zu schützendes Bauteil vor, so ist es besonders zweckmäßig, Meßgrößen der Airbag-Steuerschaltung oder/und des Unfalldatenspeichers ebenfalls an die Bewertungsmittel zu liefern, so daß die Bewertungsmittel ebenfalls auf diese Größen ansprechen können, um die dem Elektromotor zugeführte Betriebsleistung zu mindern.

Im folgenden werden Ausführungsbeispiele der Erfindung anhand von Figuren näher erläutert. Hierbei zeigt:
- Figur 1: eine Funktionsskizze eines elektromotorischen Fahrantriebs für ein Straßenfahrzeug,
- Figur 2: ein Diagramm zur Darstellung des Verlaufs einer zur Minderung der dem Elektromotor zugeführten Betriebsleistung vorgesehenen Charakteristik,
- Figur 3: ein Schaltbild einer Leistungsversorgungseinrichtung eines Elektromotors mit im Betriebsleistungsweg vorhandenen mechanischen Schaltern, und
- Figur 4: eine schematische Darstellung eines Fahrzeugs mit elektromotorischem Fahrantrieb.

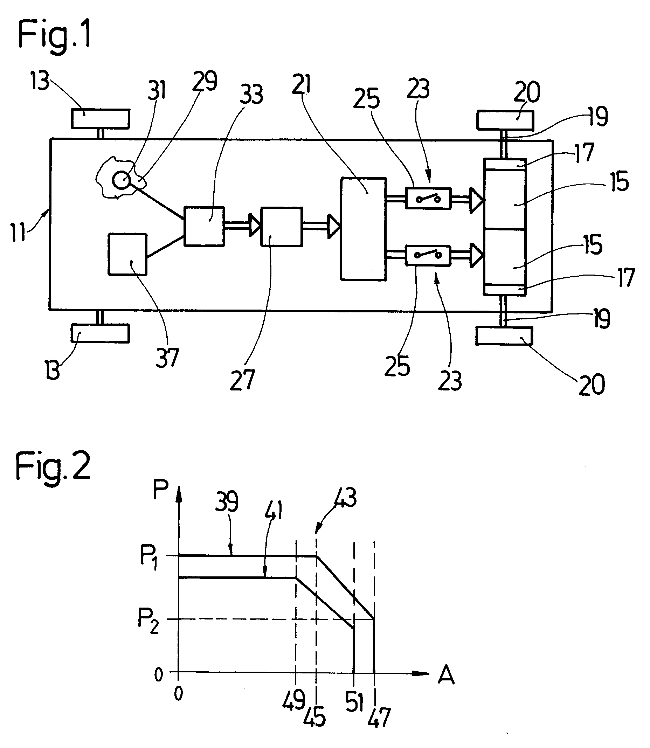

Die schematische Darstellung in Figur 1 zeigt ein Fahrzeug 11, welches zwei Vorderräder 13 sowie zwei jeweils durch einen Elektromotor 15 über ein Getriebe 17 sowie eine Gelenkwelle 19 angetriebene Hinterräder 20 umfaßt. Die einzelnen Phasenwicklungen der Elektromotoren 15 werden aus einer Leistungsversorgungseinrichtung 21 über schematisch dargestellte Betriebsleistungswege 23 mit Treiberströmen versorgt. Die Leistungsversorgungseinrichtung 21 umfaßt dabei ein aus einem mit einer Brennkraftmaschine gekoppelten Generator oder aus einer Batterie gespeistes Bordnetz sowie elektronische Umrichter, welche die die einzelnen Phasenwicklungen der Elektromotoren 15 durchfließenden Treiberströme steuern.

In Figur 1 symbolisch angedeutete mechanische Schalter 25 in den Betriebsleistungswegen 23 können Schalter sein, welche die Schaltungskonfiguration der Phasenwicklungen der Elektromotoren ändern, insbesondere eine Dreiphasendrehfeldwicklung zwischen Sternschaltung und Dreiecksschaltung umschalten, und/oder es können Schalter sein, die als Bestandteile einer Not-Ausschaltvorrichtung dazu vorgesehen sind, den Betriebsleistungsweg 23 zu den Elektromotoren in Notsituationen, z. B. im Falle einer Unfallsituation, zu unterbrechen.

Die den Elektromotoren 15 aus der Leistungsversorgungseinrichtung 21 zugeführte Betriebsleistung wird durch eine elektronische Schaltungsanordnung 27 gesteuert.

Das dargestellte Fahrzeug 11 umfaßt weiterhin einem Bauteil 29 zugeordnete Beschleunigungssensormittel 31 sowie Bewertungsmittel 33. Die Beschleunigungssensormittel 31 liefern eine von der Beschleunigung des Bauteils 29 abhängige Größe, welche an die Bewertungsmittel 33 geliefert wird. Die Bewertungsmittel 33 steuern die elektronische Schaltungsanordnung 27 so, daß die den Elektromotoren 15 zugeführte Betriebsleistung entsprechend einer vorbestimmten Charakteristik gemindert wird, wenn die von den Beschleunigungssensormitteln 31 gelieferte beschleunigungsabhängige Größe in einem bestimmten Wertebereich liegt. Die Charakteristik ist dabei so gestaltet, daß die den Elektromotoren zugeführte Betriebsleistung insbesondere dann gemindert wird, wenn die beschleunigungsabhängige Größe verhälnismäßig große Beschleunigungen des Bauteils 29 repräsentiert. Die Charakteristik ist weiterhin so bemessen, daß durch die Minderung der den Elektromotoren 15 zugeführten Betriebsleistung ein durch große Beschleunigungen verursachter Schaden an Komponenten des Fahrzeugs verhindert wird. Hierbei kommen insbesondere in den Betriebsleistungsweg 23 eingefügte mechanische Schalter 25 sowie zwischen Elektromotoren 15 und Antriebsrädern 20 eingefügte Drehmomentübertragungseinrichtungen, wie Getriebe 17 oder Gelenkwellen 19 in Betracht. Werden nämlich die Kontaktelemente eines stromdurchflossenen mechanischen Schalters 25 durch die Wirkung von im Fahrbetrieb auftretenden Beschleunigungen geöffnet, so kann ein Löschfunkenbrand entstehen, der die Lebensdauer des Schalters reduziert oder den Schalter zerstört. Derartige Beschleunigungen können vor ihrem Auftreten durch die Beschleunigungssensormittel 31 registriert und durch die Bewertungsmittel 33 erfaßt und bewertet werden, so daß die Bewertungsmittel 33 die elektronische Schaltungsanordnung 27 dazu veranlassen, die den Elektromotoren 15 zugeführte Betriebsleistung und damit den den mechanischen Schalter 25 durchfließenden Strom zu mindern, insbesondere abzuschalten. Bei einer anschließend eventuell stattfindenden beschleunigungsbedingten Öffnung der beweglichen Kontaktelemente kann dann an dem Schalter kein Schaden eintreten, da er nicht mehr stromdurchflossen ist. Nach einer bestimmten Zeitspanne bzw. nach Abklingen der Beschleunigung wird den Elektromotoren 15 aus der Leistungsversorgungseinrichtung 21 wieder die unverminderte Betriebsleistung zugeführt. Da die zur Öffnung der mechanischen Schalter notwendigen harten Beschleunigungen im Fahrbetrieb nur sehr kurzzeitig auftreten, ist eine entsprechende Unterbrechung der Betriebsleistung ebenfalls nur für kurze Zeitintervalle notwendig, so daß das Fahrverhalten durch diese Unterbrechung nicht beeinträchtigt wird.

Die Charakteristik kann ebenfalls so bemessen sein, daß Belastungen der Drehmomentübertragungseinrichtungen wie Getriebe 17 oder Gelenkwellen 19 durch Reduzierung der den Elektromotoren zugeführten Leistung gemindert werden.

Als Beschleunigungssensormittel 33 kommen beliebige Sensoren in Betracht, welche Größen liefern, die in einer bestimmten Weise von einer Beschleunigung abhängen. Insbesondere werden Beschleunigungssensoren verwendet, welche in eine bestimmte Raumrichtung 35 gerichtete translatorische Beschleunigungen des Bauteils 29 erfassen. Da die an dem Bauteil 29 auftretenden und von den Beschleunigungssensormitteln 31 gemessenen Beschleunigungswerte eine eventuelle Minderung der Betriebsleistung verursachen, ist es sinnvoll, dieses Bauteil 29 so im Fahrzeug anzuordnen, daß die daran auftretenden Beschleunigungen ähnlich den an dem zu schützenden Bauteil auftretenden Beschleunigungen sind und/oder die Beschleunigungssensormittel 31, die auf die zu schützende Komponente wirkenden Beschleunigungen mit möglichst großer Empfindlichkeit registrieren können. Um auftretende Beschleunigungen möglichst frühzeitig registrieren zu können, ist es sinnvoll, den Beschleunigungssensor im Bereich der Vorderachse und insbesondere, in Vorwärtsfahrtrichtung gesehen, vor dieser anzuordnen.

Sollen z. B. ein im Betriebsleistungsweg 23 angeordneter mechanischer Schalter 25 vor Beschleunigungswirkungen geschützt werden, so ist es insbesondere sinnvoll, das Bauteil 29 in einer strukturellen Einheit mit dem mechanischen Schalter 25 auszubilden bzw. die Beschleunigungssensormittel 33 direkt an dem Schalter 25 anzubringen.

In die Charakteristik zur Minderung der den Elektromotoren zugeführten Betriebsleistung können neben der momentan auftretenden beschleunigungsabhängigen Größe auch andere Größen über den momentanen Zustand des Fahrzeugs, wie z. B. dessen Geschwindigkeit oder die den Elektromotoren zugeführte Betriebsleistung eingehen. Die Charakteristik kann dabei in einem Kennlinienspeicher 37 als Kennlinie oder Kennlinienschar, insbesondere in Tabellenform, gespeichert sein.

Im folgenden werden Varianten der Erfindung erläutert. Einander entsprechende Komponenten sind jeweils mit gleichen Bezugszahlen bezeichnet, zur Unterscheidung jedoch mit einem Buchstaben versehen. Zur Erläuterung wird jeweils auf die gesamte vorangehende Beschreibung Bezug genommen.

Figur 2 zeigt ein Diagramm einer aus zwei Kennlinien 39, 41 bestehenden Kennlinienschar 43, welche eine zur Minderung der einem Elektromotor zugeführten Betriebsleistung vorgesehene Charakteristik repräsentiert. Dabei ist in dem Diagramm die einem Elektromotor zugeführte Betriebsleistung P gegenüber der Amplitude A der durch Beschleunigungssensormittel 31 gemessenen beschleunigungsabhängigen Größe A dargestellt. Es sollen dabei große Werte der beschleunigungsabhängigen Größe A auch große, an dem Bauteil 29 auftretende Beschleunigungen repräsentieren. Bei einer bestimmten Fahrgeschwindigkeit des Fahrzeugs sollen die Bewertungsmittel 33 die den Elektromotoren 15 zugeführte Betriebsleistung nach Maßgabe der Kennlinie 39 steuern: In einem Wertebereich zwischen Null und einem ersten Schwellenwert 45 der beschleunigungsabhängigen Größe A wird dem Elektromotor eine beispielsweise vom Fahrer über ein Fahrpedal geforderte Betriebsleistung P1 unvermindert zugeführt. In einem zwischen dem ersten Schwellenwert 45 und einem zweiten Schwellenwert 47 liegenden Wertebereich der beschleunigungsabhängigen Größe A, der mittleren Beschleunigungen des Bauteils 29 entsprechen soll, wird die dem Elektromotor zugeführte Betriebsleistung kontinuierlich von P1 auf P2 vermindert. In einem Wertebereich der beschleunigungsabhängigen Größe A, der oberhalb des zweiten Schwellenwerts 47 liegt und großen Beschleunigungen des Bauteils 29 entsprechen soll, wird die dem Elektromotor zugeführte Betriebsleistung ganz abgeschaltet.

Soll bei einer zweiten, größeren Fahrgeschwindigkeit des Fahrzeugs die Minderung der Betriebsleistung unter Berücksichtigung der Erfahrung erfolgen, daß bei größeren Fahrgeschwindigkeiten auch größere Beschleunigungen auftreten, so kann der schädlichen Wirkung dieser größeren Beschleunigungen an zu schützenden Komponenten des Fahrzeugs 11 dadurch vorgebeugt werden, daß die die Kennlinie 39 bestimmenden Schwellenwerte 45 und 47 zur Bildung einer bei größerer Fahrgeschwindigkeit maßgebenden Kennlinie 41 zu niedrigeren Schwellenwerten 49 und 51 hin verschoben werden.

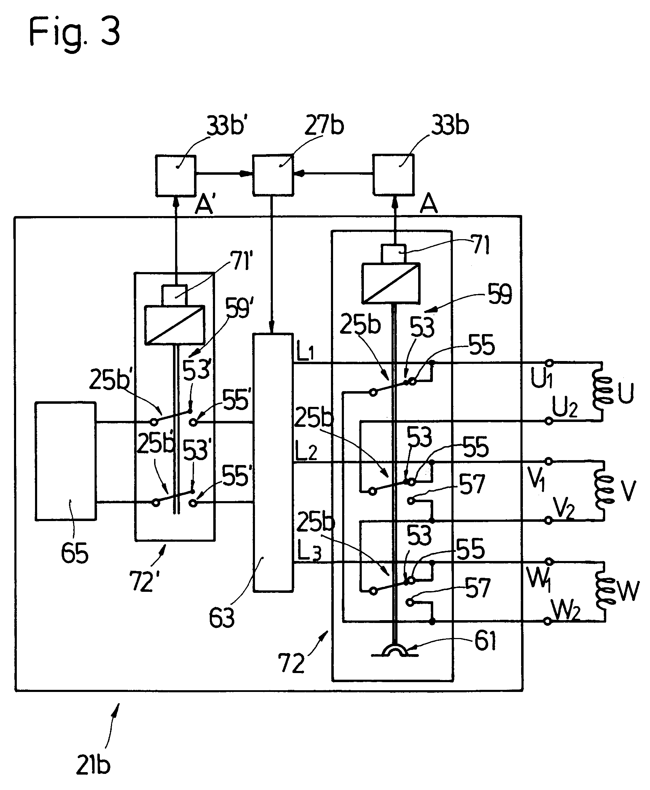

Die Figur 3 zeigt einen Schaltplan einer Leistungsversorgungseinrichtung 21b zur Versorgung eines Elektromotors 15, der drei Phasenwicklungen U, V, W mit zugehörigen Anschlüssen U1, U2, V1, V2 bzw. W1, W2 aufweist. Die Schaltungskonfiguration der Phasenwicklungen U, V, W kann mittels eines mechanischen Schalters 25b in bekannter Weise von Sternschaltung in Dreiecksschaltung umgeschaltet werden. Hierzu umfaßt der Schalter 25b drei bewegliche Kontaktelemente 53, welche zwischen feststehenden Kontaktelementen 55 und 57 umschaltbar sind. Die beweglichen Kontaktelemente 53 sind über einen elektromotrischen Stellantrieb 59 miteinander verbunden, eine bistabile Feder 61 sichert in beiden Schaltpositionen den Anpreßdruck zwischen den beweglichen und feststehenden Kontaktelementen 53 bzw. 55, 57. Die Treiberströme werden den Phasenwicklungen U, V, W über Phasenleitungen L1, L2, L3 aus einem Umrichter 63 zugeführt. Der Umrichter 63 umfaßt bevorzugt Halbleiterventile, welche durch die elektronische Schaltungsanordnung 27b gesteuert, Amplitude und Phasenlage der den einzelnen Wicklungen U, V, W zugeführten Treiberströme regeln. Der Umrichter 63 wiederum bezieht die Betriebsleistung aus einem Gleichstrombordnetz 65, welches durch einen durch eine Brennkraftmaschine getriebenen Generator oder durch eine Batterie gespeist werden kann. Die Stromzuführung zum Umrichter 63 kann durch einen ebenfalls durch einen Stellantrieb 59' betätigten mechanischen Schalter 25b', der ebenfalls bewegliche Kontaktelemente 53' und feststehende Kontaktelemente 55' umfaßt, unterbrochen werden.

An den Schaltern 25b, 25b' auftretende Beschleunigungen können dazu führen, daß aufgrund der Trägheitswirkung der beweglichen Kontaktelemente 53, 53' sowie der Stellantriebe 59, 59' der Kontaktschluß zwischen den beweglichen Kontaktelementen 53, 53' und den feststehenden Kontaktelementen 55, 55' bzw. 57 nicht gewährleistet ist. Um derartige Beschleunigungen vorzeitig zu erkennen und die die Schalter durchfließenden Strome zu mindern, ist an jedem der beiden Schalter 25b, 25b' ein Beschleunigungssensor 71 bzw. 71' vorgesehen, welcher eine beschleunigungsabhängige Größe A bzw. A' an die Bewertungsmittel 33b bzw. 33b' liefert. Die Bewertungsmittel 33b bzw. 33b' vermindern je nach Wertebereich der momentanen beschleunigungsabhängigen Größe A bzw. A' über die elektronische Schaltungsanordnung 27b die Verminderung der den Phasenwicklungen U, V, W durch den Umrichter 63 zugeführten Betriebsleistung und damit die die Schalter durchfließenden Ströme.

Um die an den Schaltern 25b, 25b' auftretenden Beschleunigungen möglichst exakt zu erfassen, sind die Beschleunigungssensoren 71 und 71' mit den ihnen zugehörigen Schaltern 25b, 25b' zu Baueinheiten 72 bzw. 72' verbunden.

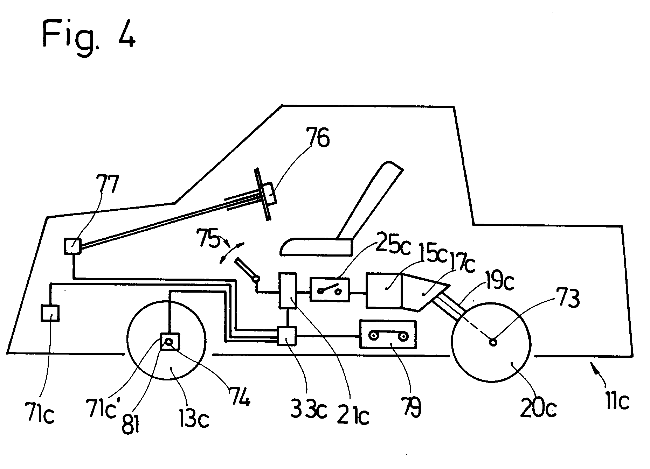

Die Figur 4 zeigt die schematische Darstellung eines Fahrzeugs 11c, welches eine durch einen Elektromotor 15c über ein Getriebe 17c sowie eine Gelenkwelle 19c angetriebene Hinterachse 73 eine Vorderachse 74 sowie ein Hinterrad 20c und ein Vorderrad 13c aufweist. In den Betriebsleistungsweg des Elektromotors 15c ist ein als Not-Ausschalter wirkender Schalter 25c eingefügt. Das Fahrzeug umfaßt weiterhin ein Fahrpedal 75 zur Steuerung der durch den Fahrer des Fahrzeugs gewünschten Betriebsleistung oder der gewünschten Fahrgeschwindigkeit des Fahrzeugs sowie einen Airbag 76 und eine Airbag-Steuerschaltung 77 zum Schutz des Fahrers in Unfallsituationen sowie einen Unfalldatenspeicher 79 zur Dokumentation eines Unfallhergangs.

Zudem sind am Fahrzeug Beschleunigungssensoren 71c und 71c' angebracht. Zum Schutz des Getriebes 17c und der Gelenkwelle 19c sind die Beschleunigungssensoren 71c und 71c' an Bewertungsmittel 33c angeschlossen, welche die dem Elektromotor 15c zugeführte Betriebsleistung, entsprechend einer vorbestimmten Charakteristik mindern. Der Beschleunigungssensor 71c ist in Vorwärtsfahrtrichtung gesehen vor der Vorderachse 74 angeordnet. Durch die damit erreichte relativ große Distanz vom Fahrzeugschwerpunkt weist dieser Beschleunigungssensor 71c eine verhältnismäßig große Empfindlichkeit für auf- und abwärtsgerichtete Beschleunigungen des Fahrzeugbugs auf. Der Beschleunigungssensor 71c' ist unmittelbar an der Achse 81 des dem Hinterrad 20c vorauslaufenden Vorderrads 13c angeordnet und ist damit besonders empfindlich für Beschleunigungen, die beim Durchfahren von Schlaglöchern auftreten.

Zum Schutz des mechanischen Schalters 25c vor Beschleunigungen in Unfallsituationen werden die Informationen der Airbag-Steuerschaltung 77 bzw. des Unfalldatenspeichers 79 an die Bewertungsmittel 33c geliefert.

## Patentansprüche

1. Elektromotorischer Fahrantrieb für ein insbesondere nicht schienengebundenes Fahrzeug (11), umfassend
- wenigstens einen Elektromotor (15),
- eine den Elektromotor (15) mit Betriebsleistung (P) versorgende Leistungsversorgungseinrichtung (21) und
- eine elektronische Schaltungsanordnung (27) zur Steuerung der dem Elektromotor (15) zugeführten Betriebsleistung,
**dadurch gekennzeichnet**,
daß an dem Fahrzeug (11) Beschleunigungssensormittel (31) angeordnet sind, die wenigstens eine von der Beschleunigung zumindest eines Bauteils (29) des Fahrzeugs (11) abhängige Größe (A) liefern und daß auf die wenigstens eine beschleunigungsabhängige Größe (A) ansprechende Bewertungsmittel (33) vorgesehen sind, die die elektronische Schaltungsanordnung (27) so steuern, daß zumindest in einem Teil des Wertebereichs der beschleunigungsabhängigen Größe (A) die dem Elektromotor (15) zugeführte Betriebsleistung (P) entsprechend einer vorbestimmten Charakteristik gemindert wird.

2. Fahrantrieb nach Anspruch 1, dadurch gekennzeichnet, daß die Bewertungsmittel (33) auf die Amplitude oder/und die Änderungsrate der von den Beschleunigungssensormitteln gelieferten Größe (A) ansprechen.

3. Fahrantrieb nach Anspruch 1 oder 2, dadurch gekennzeichnet, daß die Beschleunigungssensormittel (31) wenigstens einen translatorische Beschleunigungen erfassenden Beschleunigungssensor (71) aufweisen.

4. Antrieb nach Anspruch 1 bis 3, dadurch gekennzeichnet, daß die Bewertungsmittel (33) über die elektronische Schaltungsanordnung (27) die dem Elektromotor (15) zugeführte Betriebsleistung (P) mindern, insbesondere abschalten, wenn die beschleunigungsabhängige Größe (A) einen vorgegebenen Schwellenwert (45, 49 bzw. 47, 51) übersteigt.

5. Antrieb nach einem der Ansprüche 1 bis 4, dadurch gekennzeichnet, daß die vorbestimmte Charakteristik abhängig von einer die momentane Fahrgeschwindigkeit des Fahrzeugs (11) repräsentierenden Größe oder/und einer die momentane Betriebsleistung repräsentierenden Größe änderbar ist.

6. Antrieb nach einem der Ansprüche 1 bis 5, dadurch gekennzeichnet, daß die vorbestimmte Charakteristik wenigstens eine insbesondere in Tabellenform in einem Kennlinienspeicher (37) gespeicherte Kennlinie (39, 41) umfaßt.

7. Fahrantrieb nach einem der Ansprüche 1 bis 6, dadurch gekennzeichnet, daß die Leistungsversorgungseinrichtung (21) im elektrischen Betriebsleistungsweg (23) zum Elektromotor (15) wenigstens einen mechanischen Schalter (25) mit wenigstens einem beweglichen Kontaktelement (53) aufweist
und daß die Bewertungsmittel (33) die dem Elektromotor (15) über den mechanischen Schalter (25) zugeführte Betriebsleistung (P) mindern, insbesondere abschalten, wenn die beschleunigungsabhängige Größe (A) eine Beschleunigung des Schalters (25) repräsentiert, die über einem die Kontaktöffnungsbeschleunigung des Schalters (25) repräsentierenden Schwellenwert (45, 49 bzw. 47, 51) liegt.

8. Fahrantrieb nach Anspruch 7, dadurch gekennzeichnet, daß der mechanische Schalter (25) Bestandteil einer Not-Ausschaltvorrichtung ist.

9. Fahrantrieb nach Anspruch 7 oder 8, dadurch gekennzeichnet, daß die Beschleunigungssensormittel (31) Bestandteile einer Airbag-Steuerschaltung (77) oder/und eines Unfalldatenspeichers (79) sind.

10. Fahrantrieb nach Anspruch 7 bis 9, dadurch gekennzeichnet, daß der Elektromotor (15) eine in mehrere Phasenwicklungen (U, V, W) unterteilte Drehfeldwicklung und die Leistungsversorgungseinrichtung (21) eine über mehrere mechanische Schalter (25) an die Phasenwicklungen (U, V, W) angeschlossene elektronische Umrichteranordnung aufweist, wobei mittels der Schalter (25) die Schaltungskonfiguration der Phasenwicklungen (U, V, W) änderbar ist, insbesondere bei einer Dreiphasen-Drehfeldwicklung zwischen Stern- und Dreieckschaltung umschaltbar ist.

11. Fahrantrieb nach einem der Ansprüche 7 bis 10, dadurch gekennzeichnet, daß der mechanische Schalter (25) einen insbesondere elektromotorischen Stellantrieb (59) zur Bestätigung des beweglichen Kontaktelements (53) umfaßt.

12. Fahrantrieb nach einem der Ansprüche 7 bis 11, dadurch gekennzeichnet, daß die Beschleunigungssensormittel (31) wenigstens einen Beschleunigungssensor (71) umfassen, der zusammen mit dem Schalter (25) an einer gemeinsamen Baueinheit (72) des Fahrzeugs, insbesondere dem Elektromotor (15), gehalten ist.

13. Fahrantrieb nach einem der Ansprüche 1 bis 12, dadurch gekennzeichnet, daß die Beschleunigungssensormittel (31) wenigstens einen Beschleunigungssensor (71) umfassen, der in Vorwärtsfahrtrichtung des Fahrzeugs im Abstand vor einem durch Minderung der Betriebsleistung des Elektromotors (15) vor Beschleunigungseinwirkung zu schützenden Bauteil, insbesondere im Abstand vor einem im Betriebsleistungsweg (23) der Leistungsversorgungseinrichtung (21) angeordneten mechanischen Schalter (25), an dem Fahrzeug (11) angeordnet ist.

14. Fahrantrieb nach Anspruch 13, dadurch gekennzeichnet, daß das zu schützende Bauteil im Bereich der Hinterachse (73) des Fahrzeugs (11) und der Beschleunigungssensor (71) im Bereich der Vorderachse insbesondere in Vorwärtsfahrtrichtung vor dieser angeordnet ist.

15. Fahrantrieb nach einem der Ansprüche 1 bis 14, dadurch gekennzeichnet, daß der Elektromotor (15) mit wenigstens einem Rad (13, 20) des Fahrzeugs (11) über eine Drehmomentübertragungseinrichtung (17, 19), insbesondere ein Getriebe (17) oder/und eine Gelenkwelle (19) verbunden ist und daß die Bewertungsmittel (53) die dem Elektromotor (15) zugeführte Betriebsleistung mindern, insbesondere abschalten, wenn die beschleunigungsabhängige Größe (A) einen vorgegebenen Schwellenwert (45, 49 bzw. 47, 51) übersteigt.
